# EUROPEAN PATENT APPLICATION

(11) **EP 4 494 864 A1**
(43) Date of publication of application: **22.01.2025**
(21) Application number: 23770916.7
(22) Date of filing: 17.03.2023
(51) Int. Cl.: B32B 27/00, C09J 5/00, C09J 201/00, B32B 15/08, B29C 65/36, B29C 65/40

(54) **ADHESION METHOD AND HOT-MELT ADHESIVE FILM FOR INDUCTION HEATING**

(30) Priority: 18.03.2022 JP 2022044326
(71) Applicant: Fujimori Kogyo Co., Ltd., Tokyo 112-0002 (JP)
(72) Inventor: MARUYAMA, Yuiko, Tokyo 112-0002 (JP); TAKEYAMA, Shunsuke, Tokyo 112-0002 (JP)
(74) Representative: Lavoix
(86) International application number: PCT/JP2023/010600
(87) International publication number: WO 2023/176964

(57) **Abstract**

A bonding method for bonding an adherend 1 made of a resin (1) and an adherend 2 made of a resin (2) different from the resin (1) together, the method having: stacking the adherend 1, a hot-melt adhesive film for induction heating, and the adherend 2 in this order, to obtain a stack; and heating the hot-melt adhesive film for induction heating using an induction heating device, in which the hot-melt adhesive film for induction heating is a hot-melt adhesive film for induction heating in which a thermoplastic resin layer (A') composed of a thermoplastic resin (A), a metal layer, and a thermoplastic resin layer (B') composed of a thermoplastic resin (B) are laminated in this order, and in the stack, the adherend 1 and the thermoplastic resin layer (A') are in contact with each other, and the adherend 2 and the thermoplastic resin layer (B') are in contact with each other.

## Description

### Technical Field

The present invention relates to a bonding method and a hot-melt adhesive film for induction heating.

Priority is claimed on Japanese Patent Application No. 2022-044326, filed March 18, 2022, the content of which is incorporated herein by reference.

### Background Art

A heat sealing (heat fusion) method is known as a method for bonding adherends together. In the heat sealing method, for example, a film having a hot-melt (thermoplastic) adhesive layer is used. When such a film is interposed between adherends and then heated, an adhesive layer melts. Subsequently, when the heating is stopped, the adhesive layer solidifies, and the adherends are bonded together.

As such a film, Patent Document 1 discloses a laminated body including a polyolefin-based heat sealing layer.

### Citation List

### Patent Document

Patent Document 1: PCT International Publication No. WO 2019/078134

### Summary of Invention

### Technical Problem

In a heat sealing method for bonding adherends together by heating, in a case where different resins are bonded as adherends, the bonding strength is likely to be low. The different resins are, for example, resins having different melting points or thermal conductivities. This is because, in this case, a resin having a low melting point or a resin having a high thermal conductivity melts first during heat sealing, and a difference is caused in the degree of mutual welding or solidification of sealing portions.

The present invention has been made in view of the above circumstances, and an object of the present invention is to provide a bonding method capable of firmly bonding different resins together and a hot-melt adhesive film for induction heating that is used in the bonding method.

### Solution to Problem

That is, the present invention employs the following configurations.
[1] A bonding method for bonding an adherend 1 made of a resin (1) and an adherend 2 made of a resin (2) different from the resin (1) together, the method having: stacking the adherend 1, a hot-melt adhesive film for induction heating, and the adherend 2 in this order, to obtain a stack; and heating the hot-melt adhesive film for induction heating using an induction heating device, in which the hot-melt adhesive film for induction heating is a hot-melt adhesive film for induction heating in which a thermoplastic resin layer (A') composed of a thermoplastic resin (A), a metal layer, and a thermoplastic resin layer (B') composed of a thermoplastic resin (B) are laminated in this order, and in the stack, the adherend 1 and the thermoplastic resin layer (A') are in contact with each other, and the adherend 2 and the thermoplastic resin layer (B') are in contact with each other.
[2] The bonding method according to [1], in which any one or both of the adherend 1 and the adherend 2 have a thickness of 0.5 mm or greater and 10 mm or less.
[3] A hot-melt adhesive film for induction heating for bonding an adherend 1 made of a resin (1) and an adherend 2 made of a resin (2) different from the resin (1) together, in which the hot-melt adhesive film for induction heating is a film in which a thermoplastic resin layer (A'), a metal layer, and a thermoplastic resin layer (B') are laminated in this order, and a thermoplastic resin (A) constituting the thermoplastic resin layer (A') is a resin different from a thermoplastic resin (B) constituting the thermoplastic resin layer (B').

### Advantageous Effects of Invention

According to the present invention, it is possible to provide a bonding method capable of causing different resins to firmly adhere to each other and a hot-melt adhesive film for induction heating that is used in the bonding method.

### Brief Description of Drawings

[FIG. 1] FIG. 1 is a schematic view for describing a step of a bonding method of the present embodiment.
[FIG. 2] FIG. 2 is a schematic view for describing a step of the bonding method of the present embodiment.
[FIG. 3] FIG. 3 is a schematic view of a cross section of one example of a hot-melt adhesive film for induction heating of the present embodiment.
[FIG. 4] FIG. 4 is a schematic view for describing a method for measuring a shear strength.

### Description of Embodiments

In the present invention, whether or not adherends are in a state of being firmly bonded is evaluated by observing their delamination state and measuring shear strength.

### [Method for measuring shear strength]

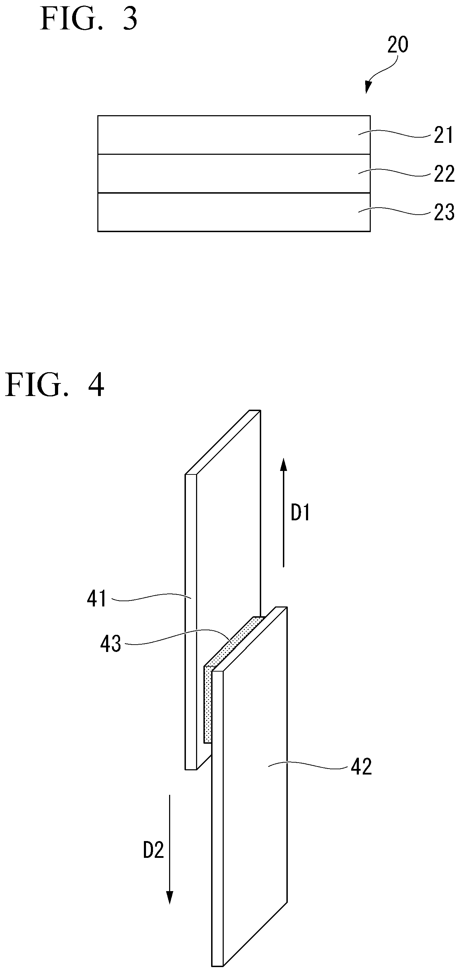

Test piece: A laminated body in which an adherend 1 and an adherend 2 described below are heated and bonded together with a hot-melt adhesive film for induction heating. More specifically, a laminated body shown in FIG. 4 is used as the test piece. In FIG. 4, a laminated body in which the adherend 1 indicated by reference numeral 41, the hot-melt adhesive film for induction heating indicated by reference numeral 43, and the adherend 2 indicated by reference numeral 42 are laminated in this order is used as the test piece.

The shapes of the adherend 1 and the adherend 2 each have a width of 25 mm, a length of 50 mm, and a thickness of 2 mm. The shape of the hot-melt adhesive film for induction heating has a width of 25 mm, a length of 15 mm, and a thickness of 340 µm.

Test conditions: Regarding the laminated body shown in FIG. 4, the shear strength is measured by simultaneously pulling the adherend 1 indicated by reference numeral 41 and the adherend 2 indicated by reference numeral 42 at a tensile rate of 1 mm/min each. In FIG. 4, a tensile direction of the adherend 1 indicated by reference numeral 41 is referred to as D1, and a stretching direction of the adherend 2 indicated by reference numeral 42 is referred to as D2.

If the shear strength is 1.6 MPa or greater, and the delamination occurs by cohesive failure or no delamination occurs, it is evaluated as "the adherends are in a state of being firmly bonded." For example, if the shear strength is 1.6 MPa or greater but the delamination occurs by interfacial delamination, the bonding strength between the adherends is evaluated as insufficient.

### <Bonding method>

The present embodiment is a bonding method in which the adherend 1 made of a resin (1) and the adherend 2 made of a resin (2) different from the resin (1) are bonded together using an induction heating device.

The bonding method of the present embodiment has a step of obtaining a stack and a step of heating a hot-melt adhesive film for induction heating.

Hereinafter, each step of the present embodiment will be described.

### <<Step of obtaining stack>>

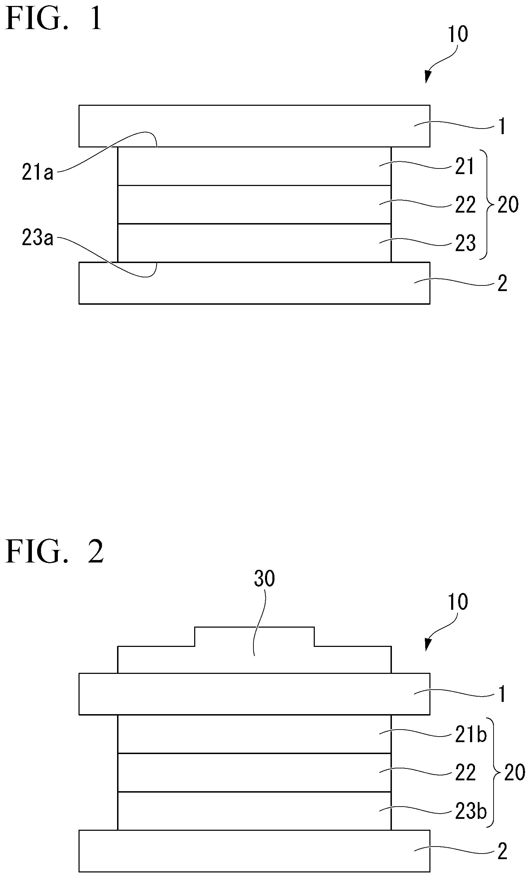

First, the adherend 1, a hot-melt adhesive film for induction heating 20, and the adherend 2 are stacked in this order to obtain a stack 10. FIG. 1 shows a schematic view of a cross section of the stack 10. In the stack 10, the adherend 1, the hot-melt adhesive film for induction heating 20, and the adherend 2 are stacked in this order.

In the hot-melt adhesive film for induction heating 20, a thermoplastic resin layer (A') 21, a metal layer 22, and a thermoplastic resin layer (B') 23 are laminated in this order.

In the stack 10, the adherend 1 is in contact with a surface 21a of the hot-melt adhesive film for induction heating 20, and the adherend 2 is in contact with a surface 23a of the hot-melt adhesive film for induction heating 20.

The surface 21a is a surface of the thermoplastic resin layer (A') 21 opposite to the surface in contact with the metal layer 22.

The surface 23a is a surface of the thermoplastic resin layer (B') 23 opposite to the surface in contact with the metal layer 22.

The thermoplastic resin layer (A') 21 is composed of a thermoplastic resin (A), and the thermoplastic resin layer (B') is composed of a thermoplastic resin (B).

### <<Step of heating hot-melt adhesive film for induction heating>>

When an induction heating device 30 is pressed against the stack 10 as shown in FIG. 2 and induction heating is performed, the metal layer 22 generates heat. As a result, the thermoplastic resin layer (A') 21 and the thermoplastic resin layer (B') 23 in contact with the metal layer 22 are heated and melted.

When the induction heating is stopped, the heat generation of the metal layer 22 stops, causing the temperature to decrease. The melted crystalline resins solidify, the thermoplastic resin layer (A') 21 changes into an adhesive layer 21b, and the thermoplastic resin layer (B') 23 changes into an adhesive layer 23b. As a result, the adherend 1 and the adherend 2 are bonded together.

In FIG. 2, the induction heating device 30 is shown being pressed against the adherend 1, but it is also acceptable to press the induction heating device 30 against the adherend 2.

As the induction heating device 30, for example, a portable electromagnetic induction heater manufactured by BROWNIE Co., Ltd. can be used.

The pressing time for the induction heating device 30 is about 5 seconds to 10 seconds. With this level of heating time, the adherend 1 and the adherend 2 can be bonded together without being damaged by heat.

The frequency of the induction heating device 30 may be appropriately set, for example, in a range of 3 kHz to 30 kHz.

### (Adherend 1)

The adherend 1 is made of the resin (1).

Examples of the resin (1) include polyethylene (melting point: 120°C), polypropylene (melting point: 160°C), polyamide (melting point: 225°C), polyethylene terephthalate (melting point: 260°C), polybutylene terephthalate (melting point: 223°C), and polycarbonate (glass transition temperature: 150°C).

The shape of the adherend 1 is not particularly limited, but may be, for example, a plate shape having a thickness of 3 mm or greater and 10 mm or less, or may be any desired three-dimensional shape.

### (Adherend 2)

The adherend 2 is made of the resin (2).

The resin (2) is a resin having a melting point or a glass transition temperature different from that of the resin selected as the resin (1), among the resins given above as examples of the resin (1).

The difference in melting point between the resin (1) and the resin (2) is, for example, 5°C or greater, 10°C or greater, 30°C or greater, 50°C or greater, 80°C or greater, 100°C or greater, or 120°C or greater.

The shape of the adherend 2 is not particularly limited, but for example, the thickness may be 3 mm or greater and 10 mm or less, and the shape may be any desired three-dimensional shape.

Examples of combinations of the adherend 1 and the adherend 2 include:.
· A combination of polyethylene terephthalate as the adherend 1 and polypropylene as the adherend 2.
· A combination of polyethylene terephthalate as the adherend 1 and polyethylene as the adherend 2.
· A combination of polypropylene as the adherend 1 and polyethylene as the adherend 2.
· A combination of polybutylene terephthalate as the adherend 1 and polypropylene as the adherend 2.
· A combination of polybutylene terephthalate as the adherend 1 and polyethylene as the adherend 2.
· A combination of polycarbonate as the adherend 1 and polypropylene as the adherend 2.

For example, when the adherend 1 made of polyethylene having a melting point of 120°C and the adherend 2 made of polypropylene having a melting point of 160°C are bonded together by a conventional heat sealing method including a step of heating from the outside, the polyethylene having a low melting point melts first, causing differences in the degree of mutual welding or solidification of sealing portions. In addition, when applying the heat required for the adhesion of the adherend 2, the adherend 1 deforms.

Furthermore, for example, in cases where a thick adherend having a thickness of several millimeters or a heat-sensitive adherend needs to be bonded, adhesion by heat sealing may not be applicable.

In the bonding method of the present embodiment, the hot-melt adhesive film for induction heating of the present embodiment, which will be described later, is used, and heating is performed by induction heating from the side of the hot-melt adhesive film for induction heating . Therefore, the adherends are less likely to be affected by heat, and even a thick adherend or a heat-sensitive adherend can be firmly bonded in a short time.

### (Hot-melt adhesive film for induction heating)

FIG. 3 shows a schematic view of a cross section of one example of the hot-melt adhesive film for induction heating 20 of the present embodiment.

The hot-melt adhesive film for induction heating 20 is a laminated body in which the thermoplastic resin layer (A') 21, the metal layer 22, and the thermoplastic resin layer (B') 23 are laminated in this order.

The thermoplastic resin layer (A') 21 is composed of a resin different from the resin constituting the thermoplastic resin layer (B') 23. The resins constituting the thermoplastic resin layer (A') 21 and the thermoplastic resin layer (B') 23 are selected based on the composition of the resins constituting the adherend 1 and the adherend 2 to be bonded together.

The thermoplastic resin (A) constituting the thermoplastic resin layer (A') 21 is preferably the same resin as the resin constituting the adherend 1, and the thermoplastic resin (B) constituting the thermoplastic resin layer (B') 23 is preferably the same resin as the resin constituting the adherend 2.

The "same resin" may be the same resin composed of the same components and having the same composition ratio, and the composition ratio may be different as long as the main component is the same.

For example, in a case where the adherend 1 is polypropylene and the adherend 2 is polyethylene, polypropylene is used as the resin constituting the thermoplastic resin layer (A') 21, and polyethylene is used as the resin constituting the thermoplastic resin layer (B').

The thicknesses of the thermoplastic resin layer (A') 21 and the thermoplastic resin layer (B') 23 may be each appropriately adjusted within a range of 20 µm or greater and 200 µm or less.

The thicknesses of the thermoplastic resin layer (A') 21 and the thermoplastic resin layer (B') 23 may be the same as or different from each other. It is, though, preferable for them to be the same, from the viewpoint of achieving equivalent heat conduction from the metal layer 22.

As the metal layer 22, for example, an aluminum foil or stainless steel foil having a thickness of 10 µm or greater and 80 µm or less can be used.

### (Method for manufacturing hot-melt adhesive film for induction heating)

A method for manufacturing the hot-melt adhesive film for induction heating is not particularly limited.

Examples of a method for laminating the metal layer, the thermoplastic resin layer (A), and the thermoplastic resin layer (B) include a method which includes the metal layer, the film-like thermoplastic resin layer (A), and the film-like thermoplastic resin layer (B) laminated by a dry lamination method, an extrusion lamination method, or the like, to give the hot-melt adhesive film for induction heating.

### Examples

The following examples will provide a more specific description of the present invention, but the present invention is not limited to these examples.

### <Experimental Example 1>

A polyethylene terephthalate plate as an adherend 1 and a polypropylene plate as an adherend 2 were bonded together. The adherend 1 and the adherend 2 each had a width of 25 mm, a length of 50 mm, and a thickness of 2 mm.

### < Example 1>>

A polyester-based adhesive resin (MODIC GK320, from Mitsubishi Chemical Corporation) was laminated on one surface of an aluminum foil having a thickness of 40 µm, and a polypropylene-based adhesive resin (ADMER QE060, from Mitsui Chemicals, Inc.) was laminated on the other surface. As a result, a hot-melt adhesive film for induction heating 1 of 25 mm in width, 15 mm in length, and 340 µm in thickness, in which a thermoplastic resin layer (A') was a polyester resin layer having a thickness of 150 µm, a thermoplastic resin layer (B') was a polypropylene resin layer having a thickness of 150 µm, was obtained.

The adherend 1, the hot-melt adhesive film for induction heating 1, and the adherend 2 were stacked in this order to obtain a stack 10. In the stack 10, the adherend 1 was in contact with the thermoplastic resin layer (A'), and the adherend 2 was in contact with the thermoplastic resin layer (B'). Thereafter, the hot-melt adhesive film for induction heating 1 was heated for 6 seconds at a frequency of 20 kHz using an induction heating device (portable electromagnetic induction heater manufactured by BROWNIE Co., Ltd.),to bond the adherend 1 and the adherend 2 together.

When the hot-melt adhesive film for induction heating 1 was used, the shear strength was 1.93 MPa, and cohesive failure occurred in the polyester resin layer of an adhesive layer.

### < Comparative Example 1>>

Polyester (MODIC GK320 from Mitsubishi Chemical Corporation) was laminated on both surfaces of an aluminum foil having a thickness of 40 µm to form resin layers each having a thickness of 150 µm, thereby obtaining a hot-melt adhesive film for induction heating 11.

The hot-melt adhesive film for induction heating 11 had both the thermoplastic resin layers (A') and (B') made of polyester, with dimensions of 25 mm width, 15 mm length, and 340 µm thickness.

The adherend 1, the hot-melt adhesive film for induction heating 11, and the adherend 2 were stacked in this order. Thereafter, the hot-melt adhesive film for induction heating 11 was heated for 6 seconds at a frequency of 20 kHz using an induction heating device (portable electromagnetic induction heater manufactured by BROWNIE Co., Ltd.), to bond adherend 1 and the adherend 2 together.

When the hot-melt adhesive film for induction heating 11 was used, the shear strength was 0.84 MPa, and interfacial delamination occurred between the adherend 1 and the polyester resin layer.

### < Comparative Example 2>>

Polypropylene (ADMER QE060 from Mitsui Chemicals, Inc.,) was laminated on both surfaces of an aluminum foil having a thickness of 40 µm to form resin layers each having a thickness of 150 µm, thereby obtaining a hot-melt adhesive film for induction heating 12.

The hot-melt adhesive film for induction heating 12 had both the thermoplastic resin layers (A') and (B') made of polypropylene, with dimensions of 25 mm width, 15 mm length, and 340 µm thickness.

The adherend 1, the hot-melt adhesive film for induction heating 12, and the adherend 2 were stacked in this order. Thereafter, the hot-melt adhesive film for induction heating 12 was heated for 6 seconds at a frequency of 20 kHz using an induction heating device (portable electromagnetic induction heater manufactured by BROWNIE Co., Ltd.), to bond the adherend 1 and the adherend 2 together.

When the hot-melt adhesive film for induction heating 12 was used, the shear strength was 1.53 MPa, and interfacial delamination occurred between the adherend 1 and the polypropylene resin layer.

### <Experimental Examples 2 to 5>

The adherend 1 and the adherend 2 were bonded by the same method as in Experimental Example 1, except that the adherend 1, the adherend 2, and the thermoplastic resin layer (A') and the thermoplastic resin layer (B') of the hot-melt adhesive film for induction heating were each changed to materials shown in Table 1 below. The shear strength was measured, and the delamination state was observed.

**[Table 1]**

| | Adherend 1/Adherend 2 | | Hot-melt adhesive film for induction heating | | Shear strength [MPa] | delamination state |
|---|---|---|---|---|---|---|
| | | | A' layer | B' layer | | |
| Experimental Example 1 | PET/PP | Comparative Example 1 | Polyester | Polyester | 0.84 | Adhesive body polyester/adherend PP, interfacial delamination |
| | | Comparative Example 2 | PP | PP | 1.53 | Adhesive body PP/adherend PET, interfacial delamination |
| | | Example 1 | Polyester | PP | 1.93 | Adhesive body polyester, cohesive failure |
| Experimental Example 2 | PET/PE | Comparative Example 3 | Polyester | Polyester | 0.56 | Adhesive body polyester/adherend PE, interfacial delamination |
| | | Comparative Example 4 | PE | PE | 1.46 | Adhesive body PE/adherend PET, interfacial delamination |
| | | Example 2 | Polyester | PE | 2.23 | Adhesive body polyester, cohesive failure |
| Experimental Example 3 | PP/PE | Comparative Example 5 | PP | PP | 2.92 | Adhesive body PE/adherend PP, interfacial delamination |
| | | Comparative Example 6 | PE | PE | 2.30 | Adhesive body PP/adherend PE, interfacial delamination |
| | | Example 3 | PP | PE | 3.15 | Adherend PE, stretching without delamination |
| Experimental Example 4 | PC/PP | Comparative Example 7 | Polyester | Polyester | 1.64 | Adhesive body polyester/adherend PP interfacial delamination |
| | | Comparative Example 8 | PP | PP | 0.90 | Adhesive body PP/adherend PC, interfacial delamination |
| | | Example 4 | Polyester | PP | 3.75 | Adhesive body polyester, cohesive failure |
| Experimental Example 5 | PET/PET | Reference Example 1 | Polyester | Polyester | 3.16 | Adhesive body polyester, cohesive failure |
| | PP/PP | Reference Example 2 | PP | PP | 5.58 | Adherend PP, rupturing |
| | PE/PE | Reference Example 3 | PE | PE | 2.67 | Adherend PE, stretching without delamination |

In Table 1, each abbreviation means the following material.
· PP: Polypropylene
· PE: Polyethylene
· PC: Polycarbonate

As shown in the above results, adherends made of resins having different melting points could be firmly bonded together in a short period of time by the bonding method of the present invention using the hot-melt adhesive film for induction heating of the present invention.

### Reference Signs List

1: Adherend
2: Adherend
10: Stack
20: Hot-melt adhesive film for induction heating
21: Thermoplastic resin layer (A')
22: Metal layer
23: Thermoplastic resin layer (B')
21a: Surface
23a: Surface
30: Induction heating device

## Claims

1. A bonding method for bonding an adherend 1 made of a resin (1) and an adherend 2 made of a resin (2) different from the resin (1) together, the method comprising:
stacking the adherend 1, a hot-melt adhesive film for induction heating, and the adherend 2 in this order, to obtain a stack; and
heating the hot-melt adhesive film for induction heating using an induction heating device,
wherein the hot-melt adhesive film for induction heating is a hot-melt adhesive film for induction heating in which a thermoplastic resin layer (A') composed of a thermoplastic resin (A), a metal layer, and a thermoplastic resin layer (B') composed of a thermoplastic resin (B) are laminated in this order, and
in the stack, the adherend 1 and the thermoplastic resin layer (A') are in contact with each other, and the adherend 2 and the thermoplastic resin layer (B') are in contact with each other.

2. The bonding method according to Claim 1,
wherein any one or both of the adherend 1 and the adherend 2 have a thickness of 0.5 mm or greater and 10 mm or less.

3. A hot-melt adhesive film for induction heating for bonding a adherend 1 made of a resin (1) and a adherend 2 made of a resin (2) different from the resin (1) together,
wherein the hot-melt adhesive film for induction heating is a film in which a thermoplastic resin layer (A'), a metal layer, and a thermoplastic resin layer (B') are laminated in this order, and
a thermoplastic resin (A) constituting the thermoplastic resin layer (A') is a resin different from a thermoplastic resin (B) constituting the thermoplastic resin layer (B').
